# EUROPÄISCHE PATENTANMELDUNG

(11) **EP 0 716 055 A1**
(43) Veröffentlichungstag der Anmeldung: **12.06.1996**
(21) Anmeldenummer: 95119244.2
(22) Anmeldetag: 06.12.1995
(51) Int. Cl.: C04B 40/00, B28C 5/02, E04F 21/12, C04B 38/00

(54) **Putz oder Estrich, Mörtel hierzu, ein Verfahren zum Herstellen desselben und Vorrichtung zum Durchführen des Verfahrens**

(30) Priorität: 07.12.1994 DE 4443594
(71) Anmelder: BAYOSAN WACHTER GmbH & Co.KG, D-87541 Hindelang/Allgäu (DE)
(72) Erfinder: Beichel, Adolf, Dipl.-Ing., D-87527 Sonthofen (DE); Schäfer, Rudolf, Dipl.-Ing., D-87545 Burgberg (DE); Horst, Werner, D-87527 Sonthofen (DE)
(74) Vertreter: Sperling, Rüdiger, Dipl.-Ing.

(57) **Zusammenfassung**

Es wird ein mineralischer Dämmputz, ein Verfahren zur Herstellung und Aufbringung sowie eine Vorrichtung zum Aufbringen angegeben. Der Dämmputz weist als Aufbau eine Haftlage auf dem Mauerwerk, eine Lage aus Leichtzuschlag mit Bindemittel/Bindemittelcompound und häufig und schließlich eine Außenlage auf, wobei die Trockenrohdichte zwischen 180 und 500 g/l und die Leichtlage als ein Haufwerk mit freien Zwickeln ausgebildet ist. Die Spritzvorrichtung besteht aus einem rohrförmigen Gehäuse (1), das eine als Mischkammer (2) dienende Erweiterung aufweist. In der Mischkammer vermischt sich zerstäubtes Bindemittel mit dem Leichtzuschlag, wobei diese Gesamtmischung aus dem Spritzkopf entsprechend einer besonderen Modulierung austreten kann.

## Beschreibung

Die Erfindung betrifft einen Putz oder Estrich, ein Verfahren zum Herstellen eines Putzes oder Estrichs, ein Verfahren zum Herstellen eines Mörtels, der für die Herstellung eines Putzes oder Estrichs verwendet wird und eine Vorrichtung zur Durchführung solcher Verfahren.

Im Stand der Technik sind Putze bekannt, die aus in dem Mörtel für den Putz eingebrachten Dämmstoffen, z.B. Styroporkügelchen, bestehen. Styropor ist ein synthetischer organischer Dämmstoff, der z.B. Entsorgungsprobleme verursachen kann.

Der Erfindung liegt daher die erste Aufgabe zugrunde, einen Putz oder Estrich bereitzustellen, der bei hinreichender Dicke gute Dämmeigenschaften aufweist.

Die Aufgabe wird erfindungsgemäß dadurch gelöst, daß der mit Bindemittel oder Bindemittelcompound benetzte Zuschlag ein Haufwerk mit freien Zwickeln zwischen benachbarten Zuschlagselementen ist.

Dadurch, daß die einzelnen Elemente des Zuschlags lediglich an ihrer Mantelfläche benetzt werden, verbleibt zwischen den einzelnen Elementen ein räumlicher Zwickelbereich, der frei von jedweder Materialanhäufung ist und somit den ausgehärteten Putz eine erhöhte Porosität verleiht. Auf diese wird die Trockenrohdichte in besonders vorteilhafter Weise herabgesetzt.

Vorteilhafterweise ist vorgesehen, daß die Trockendichte zwischen 180 und 500 g/l beträgt, der Wert für die Wärmeleitzahl zwischen 0,07 und 0,4 W/mK liegt.
Durch diese Anordnung entsteht ein räumliches Gebilde, das vorzugsweise die Form eines Haufwerks annimmt, wobei die Körner des Haufens an ihren Berührungspunkten miteinander fest verbunden sind. Vorteilhafterweise ist das Haufwerk des Leichtzuschlags ein Einkornhaufwerk, das aus der Gruppe der nachfolgenden Materialien ausgewählt oder aus Mischungen daraus gebildet ist:
Mineralische Leichtzuschläge, wie Glasschaum, Perlite, Vermiculite oder organische Leichtzuschläge, wie expandiertes Polystorol, Korkgranulat, Cellulosefaserprodukte und/oder künstliche oder natürliche Materialien geblähter oder poröser Struktur.
Vorteilhafterweise besteht das Bindemittel des Putzes aus einem Bindemittelcompound mit folgenden Bestandteilen:

| | |
|---|---|
| Portlandzement | 58 - 99% |
| Kalkhydrat | 0 - 15% |
| Füller | 0 - 15% |
| Haftvermittler,Wasserrückhaltemittel Schaumbildner, Verdicker | 0 - 20% |
| Fasern der Länge 2 - 20 mm | 0 - 2%. |

Als Füller verwendet man günstigerweise Silikastaub, Flugasche etc., wobei als Haftvermittler Kunststoffdispersionen aus Polivynilacetat, als Wasserrückhaltemittel Methylcellulose, als Schaumbildner Tenside und als Verdicker Stärkeether, Poliacrylamid oder ähnliche bekannte Materialien Verwendung finden.

Verfahren zum Herstellen eines Mörtels zur Verwendung als Putz oder Estrich sind ebenfalls bekannt. Üblicherweise wird ein solcher Mörtel über eine Förderanlage im fertigen Verarbeitungszustand einer Spritzeinrichtung angeliefert und mittels der Spritzeinrichtung auf das Mauerwerk aufgetragen; gegebenefalls wird eine Trockenmörtelmischung angeliefert und in der Spritzeinrichtung mit Wasser vermischt. (Spritzbeton-Hochdruckverfahren).

Das erfindungsgemäße Verfahren ist gekennzeichnet durch die im kennzeichnenden Teil des Anspruchs 8 genannten Verfahrensschritte a) bis e).

Das erfindungsgemäße Verfahren macht sich die Spritzmethode zu Nutze, versetzt den Fachmann jedoch bezüglich der herkömmlichen Spritztechnik in die Lage, mit wesentlich niedrigeren Drücken zu arbeiten. Dies ist aus verschiedenen Gründen vorteilhaft. Zum einen wird ein übermäßiger Rückprall und eine übermäßige Staubentwicklung vermieden und zum anderen ergibt sich ein geringerer Materialverschleiß. Vorteilhaft ist der geringere Verschleiß, sowie der geringere Wasser- und Bindemittelbedarf, wenn mit Niederdruck gearbeitet wird.

Durch die erfindungsgemäßen Verfahrensschritte ist es möglich, den Leichtzuschlag, z. B. Dämmaterial, unmittelbar aus einem Silo abzuziehen, da das Benetzen und Vermischen mit Bindemittel oder Bindemittelcompound erst in der Spritzeinrichtung erfolgt. Durch diese besondere Maßnahme können die Einrichtungen für die Zulieferung des Bindemittels aus den herkömmlich verwendeten Vorrichtungen bestehen, ohne daß gesonderte Mischanlagen erforderlich wären.

Die Förderung des Leichtzuschlags aus dem Silo erfolgt im Niederdruckverfahren. Die Förderung des Bindemittels in Form von Schlämme erfolgt in üblichen Pumpverfahren.
Bei einer besonders vorteilhaften Ausführungsform des Verfahrens wird das Bindemittelcompound in trockenem Zustand dem Leichtzuschlag bereits beigemischt, so daß in der Spritzeinrichtung lediglich Wasser zugeführt werden muß, und auf diese Weise teure Pumpen- und Förderanlagen für ein vorgefertiges Bindemittelcompound entfallen können.

Bei dem erfindungsgemäßen Verfahren zum Herstellen eines Putzes oder Estrichs wird die Aufgabe durch die kennzeichnenden Merkmale des Anspruchs 12 gelöst.

Im Stand der Technik sind Vorrichtungen zum Auftragen von Putz- oder Estrichmörtel bekannt. Dabei handelt es sich üblicherweise um Spritzen, die zugeführten fertigen Mörtel an eine Mauer werfen, oder zugeführten Trockenmörtel in der Spritzeinrichtung mit Wasser zu Mörtel mischen und diesen dann an die Mauer oder auf einen Untergrund zu Spritzen.

Der Erfindung liegt bezüglich der Vorrichtung die Aufgabe zugrunde, eine Spritzeinrichtung zu schaffen, die es gestattet, einen Mörtel, der als Putz oder Estrich verwendet wird, in der Einrichtung verarbeitungsfertig herzustellen und ihn gleichzeitig in einer besonders günstigen Verfahrensweise auf ein Mauerwerk zu spritzen.

Diese Aufgabe wird erfindungsgemäß durch die im kennzeichnenden Teil des Anspruch 15 angegebenen Merkmale gelöst.

Dabei kann in dem Gehäuse ein Luftrohr angeordnet sein, das an seinem Ende vor dem Eingang zur Mischkammer mit einer Düseneinrichtung ausgebildet ist. Des weiteren kann es vorteilhaft sein, daß das Gehäuse das Luftrohr in einem Abstand umschließt und zwischen dem Luftrohr und dem Gehäuse ein Ringkanal für die Zufuhr der ersten Komponente ausgebildet ist. Die zweite Komponente wird durch ein Lieferrohr angeliefert, das von dem Luftrohr im Abstand konzentrisch umschlossen wird.

Die Düseneinrichtung des Luftrohrs zerstäubt die zweite Komponente und in der Mischkammer wird die zerstäubte zweite Komponente mit der ersten Komponente vermischt.

Die Mischkammer steht mit einer Ausgangsdüse in Strömungsverbindung, wobei die Ausgangsdüse, als Spritzkopf bezeichnet, noch eine Zufuhr von Zusatzluft aufweisen kann. Eine derartige Zusatzluft kann auch in der Mischkammer vorgesehen werden. Solche Zusatzluft ist von Vorteil, um die Austrittsgeschwindigkeit des Mischmaterials zu steuern.

Die Mischkammer ist vorteilhafterweise derart ausgebildet, daß sie sich von einem Mischkammereingang her konisch erweitert und sich zu einem Mischkammerausgang hin in Richtung des Spritzkopfes konisch verengt. Vorteilhafterweise kann in Abstimmung mit dem zu verarbeitenden Zuschlag und dem Ausmaß der Benetzung zwischen den beiden konischen Bereichen ein zylindrischer Bereich ausgebildet sein.

Günstigerweise ist in der Mischkammer eine zusätzliche Mischeinrichtung angeordnet, bei der es sich um eine Drossel handeln kann. Eine derartige Drossel verhindert gleichzeitig das Zurückschlagen des Materials und somit ein Verstopfen des Mischkammereingangs. Günstigerweise ist die Drossel als eine Nesselmembran mit Kreuzschlitz ausgebildet.

Im Ausgang der Mischkammer kann ebenfalls eine Rückschlageinrichtung angeordnet sein, die den gleichen Aufbau aufweisen kann, wie die Nesselmembran in der Mischkammer; üblicherweise sind hier jedoch die Nesselborsten entfernt.

In den weiteren, nicht näher diskutierten Unteransprüchen sind weitere günstige Ausgestaltungen angegeben, wobei insbesondere für die Ausgestaltung der Drosselscheibe mit den Nesselborsten selbständiger Schutz begehrt wird.

Vorteilhafterweise ist der Spritzkopf mit einer Strahlreguliereinrichtung ausgerüstet, die es gestattet, den Strahl mehr oder weniger stark aufzufächern oder ihn rund austreten zu lassen. Die Strahlreguliereinrichtung kann den Strahl mechanisch und/oder pneumatisch verändern.

Vorteilhafterweise ist der Eingang für die erste Komponente seitlich am Gehäuse angeordnet, so daß durch diese Ausgestaltung ein Griff zur besseren Handhabung geschaffen wird. Die Zufuhr der einzelnen Komponenten und der Luft ist separat steuerbar, so daß stets das optimale Mischungsverhältnis in der Spritzeinrichtung hergestellt werden kann.

Dabei ist vorteilhafterweise der Luftdruck ca. 2 bar, während günstigerweise die Zufuhr der zweiten Komponente, z.B. Bindemittel und/oder Wasser ca. 8 - 10 l/min beträgt.

Die ersten Komponente, z.B. der Leichtzuschlag oder Leichtzuschlag mit einem Beigemisch von Bindemittelcompound wird mit einem Silodruck von ca. 0,6 - 0,8 bar zugeführt. Aus diesen gesamten Einstellwerten ergibt sich ein vorteilhafter Arbeitsdruck am Spritzkopf von ca. 0,4 - 0,5 bar, der durch die zusätzliche Steuerung der am Spritzkopf oder in der Mischkammer einmündenden Luftkanäle entsprechend den Anforderungen einreguliert werden kann.

Die separate Steuerbarkeit der einzelnen Komponenten an der Spritzeinrichtung ermöglicht ein besonderes Auftragverfahren. Wenn zunächst die Haftlage auf das Mauerwerk bzw. auf einem Bodenuntergrund aufgebracht werden soll, so kann die Zufuhr des Zuschlags vollständig abgeschaltet werden. Im Anschluß daran kann der Zuschlag hinzugeschaltet werden, so daß auf die Haftlage das mit dem Bindemittelcompound benetzte Zuschlaggemisch aufgetragen werden kann. Nach dem Auftragen dieser besonderen Dämmlage kann die Zuschlagzufuhr erneut abgeschaltet werden, so daß lediglich das Bindemittel austritt und auf der benetzten Zuschlaglage eine Außenlage aufgetragen werden kann.

Bei einer bestimmen Druckeinstellung der beiden Komponenten ergibt sich, daß aufgrund des leichteren Gewichts der mit Bindemittel benetzte Zuschlag im austretenden Strahl in einem oberen Bereich auf dem Mauerwerk auftrifft, wobei entsprechend einer bestimmten Zufuhrsteuerung schwereres Bindemittel im unteren Bereich des austretenden Strahls auf dem Mauerwerk auftrifft. Durch eine derartige Steuerung kann in einem einzigen Arbeitsgang die Haftlage und die Zuschlag- bzw. Dämmlage aufgetragen werden. Wird nun der Dämmmörtel in einem parallelen Verbund durch zweifaches Auftragen erzeugt, so kann mit dem Auftragen am oberen Rand des zu bearbeitenden Bereichs begonnen werden, in der beschriebenen Weise streifenweise nach unten gearbeitet und anschließend im Streifenverbund wieder nach oben gearbeitet werden, so daß bei dem zweiten Durchgang zunächst der Zuschlag und anschließend auf den Zuschlag eine Außenlage, bestehend aus Bindemittel aufgetragen werden kann.

Erleichtert wird eine derartige Vorgehensweise durch die Verwendung einer Spritzeinrichtung, bei der eine zweite Luft/Bindemittelleitung als Bypass an der Mischkammer vorbeigeführt ist und auf der Höhe des Spritzkopfes mit einer Austrittsdüsenanordnung versehen ist. Diese zweite Luft/Bindemittelleitung ist separat steuerbar und ermöglicht es, den oben beschriebenen Arbeitsvorgang auch dann durchzuführen, wenn die in der Düse eingestellte Steuergröße nicht verändert werden soll, insbesondere wenn die Leichtvorlage mager aufgetragen werden soll, so daß ein überschüssiger zusätzlicher Bindemittelanteil im Strahl nicht auftritt.

Schließlich liegt der Erfindung noch die Aufgabe zugrunde, ein Putz- oder Estrichsystemü ein Putz- oder Estrichsystem ber einfachen und kostengünstig zu erstellendem Aufbau günstige Dämmeigenschaften aufweist.

Die Aufgabe wird erfindungsgemäß durch ein Putz- oder Estrichsystem gelöst, bei dem die Dämmlage aus mit Bindemittel benetzten Leichtzuschlag und einer Decklage auf der Dämmlage besteht. Besonders günstig kann es sein, wenn zwischen dem Mauerwerk und der Dämmlage eine Haftlage angeordnet ist.

Bei einem vorteilhaften Aufbau weist der Putz oder Estrich eine mauerseitige bzw. bodenseitige Haftlage, anschließend eine bis zu 12 cm dicke, mit Bindemittel benetzte Zuschlagslage und darauf zumindest eine Außenlage auf. Der Zuschlag kann vor der Verarbeitung zusätzlich Beimischungen des trockenen Bindemittelcompounds aufweisen.

Im folgenden wird die Erfindung anhand in der Zeichnung dargestellter Ausführungsbeispiele näher erläutert. In den Figuren zeigen:
- Fig. 1: eine schematische Darstellung eines Dämmputzaufbaus gemäß der Erfindung,
- Fig. 2: eine vergrößerte Darstellung des Details II in Fig. 1,
- Fig. 3: eine schematische Darstellung einer Spritzeinrichtung mit zweigeteiltem Spritzstrahl,
- Fig. 4: eine alternative Ausführungsform der in Fig. 3 dargestellten Spritzeinrichtung mit besonderer Strahlführung,
- Fig. 5: eine schematische perspektivische Darstellung einer erfindungsgemäßen Spritzeinrichtung,
- Fig. 6: eine schematische halbseitige Schnittdarstellung der Spritzeinrichtung,
- Fig. 7: eine Seitenansicht der Nesselborsten-Drosselscheibe,
- Fig. 8: eine Ansicht der Nesselborsten-Drosselscheibe von hinten,
- Fig. 9: eine schematische Darstellung der Spritzeinrichtung aus Fig. 4,
- Fig. 10: eine schematische Darstellung einer Abwandlung der Spritzeinrichtung aus Fig. 4 und
- Fig. 11: eine Blockschalt-Übersicht über die Materialströme beim Ablauf der Verfahren.

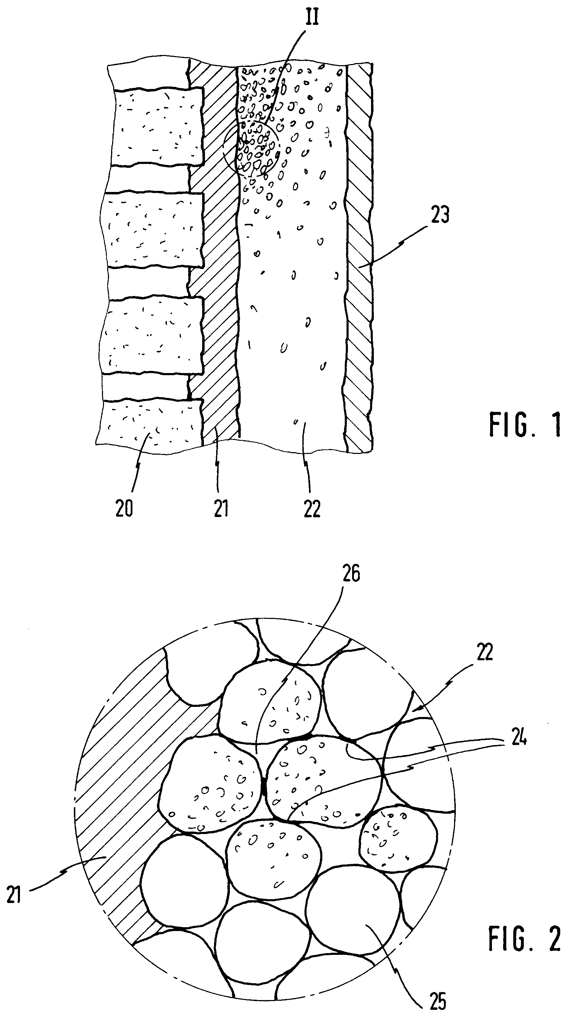

Fig. 1 zeigt eine schematische Darstellung eines auf ein Mauerwerk 20 aufgetragenen Putzes 21 - 23. Bei diesem Putz kann es sich z.B. um einen mineralischen Dämmputz handeln. Die auf dem Mauerwerk 20 unmittelbar aufgetragene Lage 21 ist eine Haftlage, die üblicherweise aus einem Bindemittelcompound besteht, das auch zur Bindung des Zuschlags verwendet wird, welcher die eigentliche Dämmlage 22 bildet. Auf der Dämmlage 22 ist eine Außenlage 23 aufgebracht.

Das Bindemittelcompound besteht aus folgenden Bestandteilen:

| | |
|---|---|
| Portlandzement (Schnellzementsystem) | 58 - 99% |
| Kalkhydrat | 0 - 15% |
| Füller | 0 - 15% |
| Haftvermittler, Wasserrückhaltemittel, Schaumbildner, Verdicker | 0 - 20% |
| Fasern der Länge 2 - 20 mm | 0 - 20% |

Als Füller verwendet man günstigerweise Silikastaub, Flugasche etc., wobei als Haftvermittler Kunststoffdispersionen aus Polivynilacetat, als Wasserrückhaltemittel Methylcellulose, als Schaumbildner Tenside und als Verdicker Stärkeether, Poliacrylamid oder ähnliche bekannte Materialien Verwendung finden.

Die Trockendichte des fertigen Dämmputzes beträgt zwischen 180 und 500 g/l. Die Wärmeleitzahl beträgt zwischen 0,07 und 0,4 W/mk, wobei diese Werte mit einem Zuschlag erzielt werden, der aus einem Einkornmaterial besteht. Das Einkornmaterial, das aus der Gruppe der nachfolgend genannten Materialien gewählt wird, bildet ein Haufwerk mit zwischen den einzelnen Körnern vorhandenen Zwickeln. Bei den Materialien handelt es sich vorzugsweise um Glasschaum, Perlite, Vermiculite oder ähnliche geblähte Materialien. Auf diese Weise erhält die Dämmlage 22 eine nahezu vollständige Luftporenstruktur, wobei das Strukturgerüst durch das aushärtende Bindemittel geschaffen wird. Vorzugsweise werden mineralische Materialien, für den Leichtzuschlag verwendet, es können jedoch auch organische Materialien, wie Korkgranulat oder im biologischen Bauwesen gängige andere Materialien verwendet werden.

Bei Industriebauten können auch künstliche Materialien mit geblähter oder poröser Struktur als Leichtzuschlag verwendet werden.

Es ist auch denkbar, mit dem Verfahren bestimmte Dämmelemente oder ganze Wandscheiben zu erstellen bzw. auszuspritzen.
Die genannten Materialien können jeweils rein oder auch in Mischungen untereinander verwendet werden.

Die mauerseitige Haftlage 21 beträgt üblicherweise 1 - 3 mm, wohingegen die mit Bindemittel benetzte Leichtzuschlagslage 2 bis zu 12 cm dick sein kann. Auf diese, von dem Leichtzuschlag gebildete Dämmlage, werden eine oder mehrere Außenlagen aufgebracht.

Der Leichtzuschlag kann, wie weiter unten näher ausgeführt werden wird, auch bereits mit trockenem Bindemittelcompound behaftet sein, so daß bei einem späteren Zubereiten lediglich Wasser hinzugefügt werden muß.

In Fig. 2 ist eine vergrößerte Darstellung des Details II aus Fig. 1 wiedergegeben. Dabei handelt es sich um die Grenzschicht zwischen der Haftlage 21 und aus Einkorn 25 bestehenden Haufwerkslage. Die Körner 25 berühren einander im Bereich der Bezugszahl 24 und sind an dieser Stelle nach dem Aushärten fest miteinander verbunden. Einander benachbarte Körner 25 bilden Luftzwischenräume oder Zwickel 26, die gemeinsam mit der porösen Struktur der Körner zwischen der Haftlage 21 und der Außenlage 23 ein stabiles Luftpolster bilden.

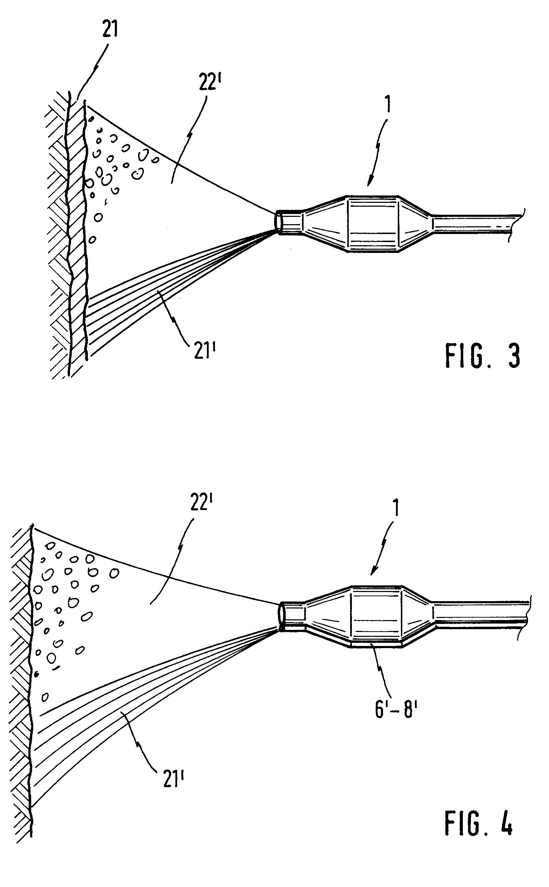

In Verbindung mit den Figuren 3 bis 5 wird nachfolgend ein Verfahren beschrieben, mittels welchem der Dämmputz hergestellt und aufgespritzt wird.

Zunächst wird die Haftlage 21 auf den Untergrund, z.B. einem Mauerwerk aufgespritzt. Aus einem Silo wird Leichtzuschlag der Spritzeinrichtung unter Druck zugeführt und in der Spritzeinrichtung mit dem aus einem separaten Behälter zugeführten Bindemittel benetzt. Dieses benetzte Putzmaterial 22' wird unter Druck auf die Haftlage aufgespritzt. Anschließend wird auf die entstandene Dämmlage 22 eine Außenlage 23 aufgespritzt, die in Form von Bindemittel 21' ebenfalls aus der Spritzeinrichtung ausgespritzt wird.

Bei einer bereits oben angesprochenen alternativen Zubereitung wird mit trockenem Bindemittel versehener Leichtzuschlag verwendet, der in der Spritzeinrichtung mit Wasser vermischt wird.

In einem solchen Fall besteht die feste Komponente aus Leichtzuschlag plus Bindemittel und die zweite Komponente lediglich aus Wasser.

Es versteht sich, daß im rein manuellen Verfahren auch der Haftputz, die Dämmlage und die Außenlage jeweils separat mit der Kelle aufgetragen werden können.

Beim Auftragen des Dämmputzes kann die Spritzeinrichtung so einjustiert werden, daß der austretende Spritzstrahl in einem oberen Bereich ganz oder größtenteils aus mit Bindemittel benetztem Leichtzuschlag 22' und ein unterer Bereich des auftreffenden Strahls aus reiner Bindemittelschlämme 21 besteht. Diese Art des Strahlaufbaus kann aber auch statt einer besonderen Einstellung der Druck- und Mengenwerte auch durch eine besondere Spritzeinrichtungskonstruktion herbeigeführt werden. In einem solchen Fall weist die Spritzeinrichtung eine separate Bindemittelzuführung und Spritzeinrichtung auf, die als Bypass neben dem Leichtzuschlagstrom zum Spritzkopf hin geführt wird.

Die Funktionsweise der Spritzeinrichtung wird weiter unten im Detail näher erläutert.

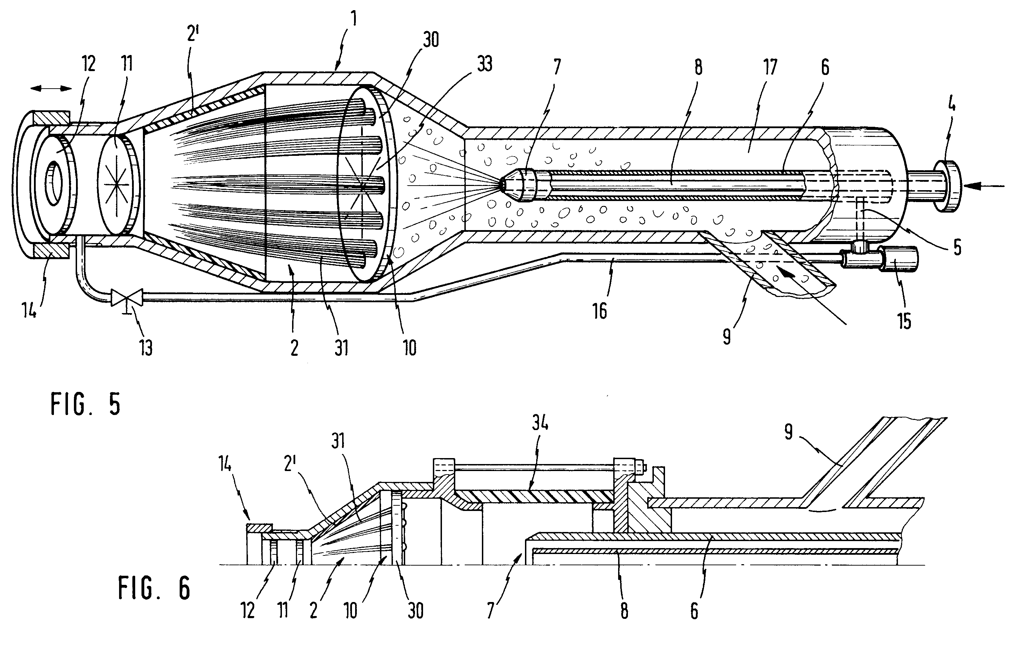

Der Aufbau der Vorrichtung wird in Verbindung mit Fig. 5 beschrieben. Die Vorrichtung zum Auftragen des Dämmputzes, die weiter oben als Spritzeinrichtung bezeichnet worden ist, besteht aus einem rohrförmigen Gehäuse 1, an dessen hinterem Ende ein Anschluß 4 für das in Suspension vorliegende Bindemittel, d.h. Schlämme oder Slurry, oder auch bei einer anderen Zusammensetzung des Ausgangsmaterials Wasser zugeführt wird.

In dem Gehäuse 1 ist konzentrisch ein Luftrohr 6 angeordnet, so daß zwischen dem Luftrohr 6 und dem Gehäuse ein Ringkanal 17 gebidet ist. In dem Luftrohr 6 ist konzentrisch ein Lieferrohr 8 angeordnet, das mit dem Anschluß 4 versehen ist. Im vorderen Bereich des Gehäuses ist eine Mischkammer 2 ausgebildet, die im dargestellten Ausführungsbeispiel aus einer konischen Erweiterung des Gehäuses, einem zylindrischen Abschnitt und einer konischen Verengung besteht. Die konische Verengung geht über in einen als Spritzkopf 14 bezeichneten Bereich der Spritzeinrichtung. Im Übergang zwischen Gehäuse und konischer Erweiterung, als Eingang zur Mischkammer bezeichnet, ist an dem Luftrohr 6 eine Düse ausgebildet, aus der ein Gemisch aus Luft und Bindemittelsuspension austritt.

Das Luftrohr 6 steht über einen besonderen Anschluß 15 am rückwärtigen Ende der Spritzeinrichtung mit einer Druckluftquelle in Strömungsverbindung. Seitlich ist an dem Gehäuse ein Anschluß 9 größeren Durchmessers für den Leichtzuschlag ausgebildet.

In der Mischkammer 2 ist eine Drossel 10 in Form einer Nesselmembran mit Kreuzschlitz angeordnet. Diese Drossel wirkt gleichzeitig als ein Rückschlagventil für das sich in der Mischkammer befindliche Mischgut.

In den Figen. 7 und 8 ist die Drosselscheibe 30 mit den Nesselborsten 31 dargestellt. Die Nesselborsten 31 sind in einer Vielzahl von im Abstand in der Drosselscheibe 30 ausgebildeten Bohrungen 35 eingesetzt. Üblicherweise liegen die Bohrungen auf mindestens einem konzentrischen Kreis. Auf der Anströmseite der Drosselscheibe 30 ist ein Haltering 32 über die einem Kreisdurchmesser angehörenden Bohrungen 35 gelegt. Um den Haltering 35 sind im Abstand der Bohrungen Nesselborsten 31 aus abriebfestem Material derart herumgeschlungen, daß sie sich in axialer Richtung durch die Bohrungen hindurch erstrecken. Die Nesselborsten 31 erstrecken sich in die Mischkammer 2 und flattern im Materialstrom, so daß sich ein zusätzlicher Mischeffekt ergibt.

Die Membran 33 der Drosselscheibe 10 ist im wesentlichen kreuzweise geschlitzt, so daß beim Durchströmen des Materials durch die Scheibe eine relativ große Durchgangsöffnung entsteht, die jedoch beim Reduzieren des Drucks geschlossen wird.

In der Mischkammer, insbesondere der konischen Verengung ist eine abriebfeste Auskleidung 2' vorgesehen.

Der Spritzkopf 14 ist mit einer Membran 12 mit Rundloch versehen, der eine weitere Drossel 11 im Mischkammerausgang vorgeschaltet ist. Auch diese Drossel 11 besteht ebenfalls aus einer Membran mit Kreuzschlitz.

Der Spritzkopf 14 ist mit einer Einrichtung zum Verstellen des Spritzstrahls ausgerüstet, wobei diese Einrichtung mechanisch und/oder pneumatisch auf den Spritzstrahl einwirken kann. Außen am Gehäuse entlang ist eine Bypass-Luftleitung angeordnet, die am Spritzkopf zwischen der Austrittsmembran und der Spritzkopfdrossel in den Eintrittskanal einmündet.

Bei der in Fig. 10 dargestellten Ausführungsvariante der Spritzeinrichtung, bei der ein weiteres Lieferrohr 8' im Bypass zum Hauptstrom vorgesehen ist, ist im vorderen Bereich ein Anschluß an die ebenfalls außen geführte Luftleitung 16 vorgesehen, so daß ein zweiter Düsenkopf 7' die Bindemittelsuspension zerstäubt und mitreißt.

Die in der Mischkammer angeordnete Drossel 10 dient neben der Funktion des Rückschlagventils auch als Mischeinrichtung, da die Membranteile durch ihre Schwingungen einen Mischeffekt herbeiführen.

Wie insbesondere in Fig. 6 zu ersehen ist, weist die Spritzeinrichtung zwischen der Mischkammer 2 und dem Bereich, in den der Anschluß 9 für den Leichtzuschlag einmündet, einen Wandbereich 34 aus elastischem Material auf. Im Bereich dieser elastischen Wand ist die Luftdüse 7 der Zerstäubereinrichtung angeordnet. Durch diese Ausbildung wird ein Zusetzen der Strömungsdurchgänge an kritischen Stellen in dem Gehäuse mit Material verhindert und der Bedienperson die Möglichkeit gegeben, durch drücken der Wandabschnitte eventuel festsitzendes Material zu lösen.

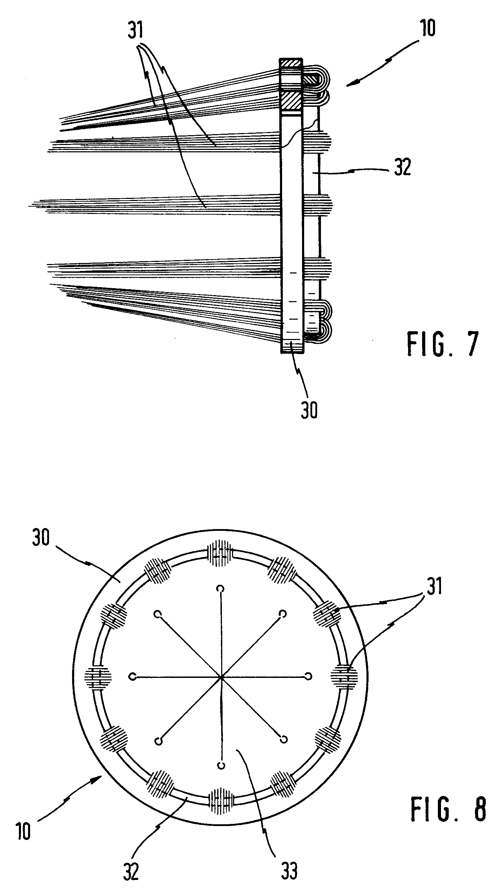

Im folgenden wird die Funktionsweise der Spritzeinrichtungen anhand der Figuren 5 bis 7 erläutert.

Das durch das Lieferrohr 8 in die Spritzeinrichtung eintretende Bindemittel, das bei dieser Ausführungsform als Slurry oder Schlämme vorliegt, wird mit einem Mengenstrom von ca. 8 - 10 l/min angeliefert. Die in dem Luftrohr 6 angelieferte Luft steht unter einem Druck von ca. 2 bar. Die am Düsenkopf 7 austretende Luft reißt die Schlämme mit und zerstäubt sie in die Mischkammer 2 hinein.

Wenn die Zufuhr des Leichtzuschlags am Anschluß 9 abgesperrt ist, tritt aus der Spritzeinrichtung lediglich die Schlämme aus. In diesem Zustand kann beispielsweise die Haftlage oder eine Außenlage aufgetragen werden.

Nun wird die Zufuhr für den Leichtzuschlag geöffnet und der Leichtzuschlag tritt unter einem Silodruck von 0,6 - 0,8 bar in die Spritzeinrichtung ein und wird von dem Schlämmendruck mit in die Mischkammer 2 gerissen und dort mit dem Bindemittel benetzt. Die vibrierende Nesselmembran fördert die Vermischung und verhindert ein Zurückschlagen des vermischten Mörtels zurück in das rohrförmige Gehäuse. Die benetzte Leichtzuschlagmischung tritt durch die Drossel 11 in den Spritzkopf 14 und tritt nach einer entsprechenden Modulierung durch den Spritzkopf durch die Lochblende hindurch aus. Die Modulierung kann am Spritzkopf durch die Zusatzluft, die mittels der Bypass-Leitung 16 angeliefert wird, entsprechend verändert werden.

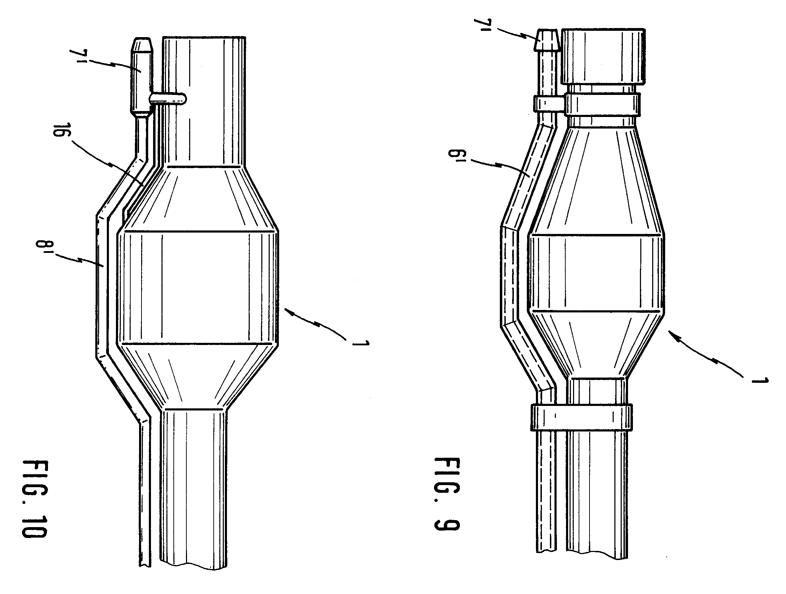

Wird der Zuschlag mit einer bestimmten Liefermenge eingestellt, so können sich im oberen Bereich des austretenden Strahls hauptsächlich Leichtzuschlag und im unteren Bereich dieses austretenden Strahls hauptsächlich Schlämme bilden, so daß das Spritzbild im oberen Bereich eine Lage Leichtzuschlag und im unteren Bereich eine Lage Schlämme aufweist. Wird nun im Arbeitsfortgang von oben nach unten gearbeitet, so erzielt man automatisch eine Haftlage aus Bindemittelschlämme, auf die bei der im wesentlichen abwärts gerichteten Hin- und Herbewegung nachfolgend die Leichtbauzuschlagslage aufgebracht wird. Um das beschriebene Spritzbild zu erzielen, kann jedoch auch eine Spritzeinrichtung verwendet werden, die im Bypass 6' - 8' die Bindemittelsuspension bis zum Spritzkopf führt, wo diese Suspension mittels einer separaten Düse 7' austritt (vergl. Fig. 9 und 10). Eine solche Vorrichtung ist insbesondere dann empfehlenswert, wenn der Leichtzuschlag mager eingestellt werden soll, so daß sich das Spritzbild nicht in der oben beschriebenen Weise entwickeln kann.

Bei der in Fig. 10 dargestellten alternativen Ausführungsform wird mit dem Lieferrohr 8' lediglich die Suspension angeliefert und ist im vorderen Bereich an der Düse 7' die Druckluft aus der Bypass-Leitung 16 zugeführt.

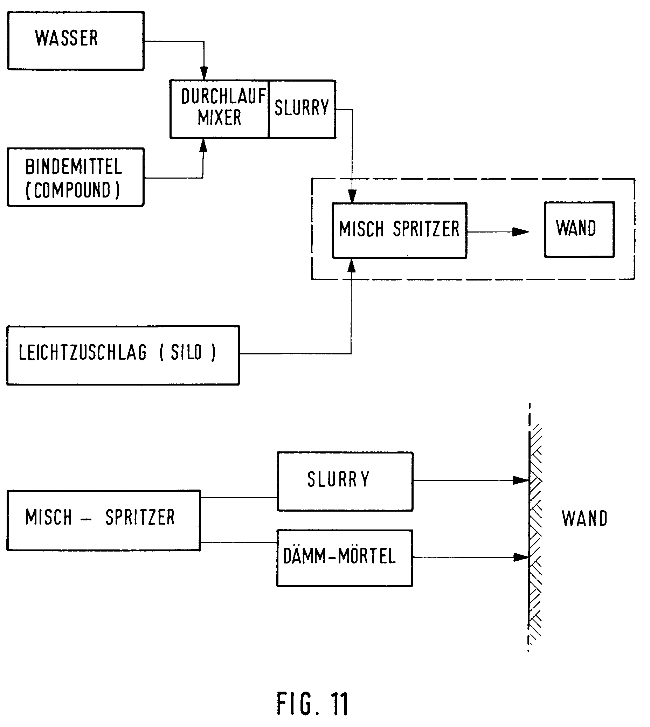

In Fig. 11 ist eine Blockschalt-Übersicht über die Materialströme beim Ablauf der Verfahren dargestellt. Auf der Baustelle wird das Bindemittel oder das Bindemittelcompound üblicherweise entweder aus einem Silo oder sackweise dem Mischer zugeführt, in dem Schlämme oder Slurry nach einer vorbestimmten Rezeptur gemischt wird. Die Schlämme wird von dem Mischer in einem Mengenstrom von ca. 8 - 10 l/min zur Spritzeinrichtung gefördert. Auch der Leichtzuschlag wird in der Regel in einem Silo angeliefert. Der Silobehälter steht unter einem Arbeitsdruck von ca. 0,6 bis 0,8 bar. Mit diesem Arbeitsdruck wird der Leichtzuschlag unmittelbar zu der Spritzeinrichtung gefördert. In der Spritzeinrichtung werden die beiden angelieferten Komponenten in der oben beschriebenen Weise zusammengeführt, wobei die Luft zur Zerstäubung der Schlämme und um den Leichtzuschlag mit dem Bindemittel zu benetzen unter einem Druck von ca. 2 bar steht. Nach diesem Benetzungsvorgang wird das Material mit einem Druck von ca. 0,4 bis 0,5 bar aufgetragen. Es ist für den Fachmann ohne weiteres erkennbar, daß die angegebenen Drücke abhängig von den zu verarbeitenden Materialien andere, auf jeweils geeignetere Werte eingestellt werden können.

Wie oben bereits angesprochen, kann die Spritzeinrichtung so gesteuert werden, daß entweder nur Schlämme oder nur Dämmörtel ausgetragen wird. Auch kann das Benetzungsverhältnis je nach Erfordernis eingestellt werden.

Bei dem oben beschriebenen Verfahren wurde der Spritzeinrichtung das Bindemittel in Form von Suspensionen (Schlämme, Slurry) aus einem besonderen Behälter, z.B. dem Mischer, mittels einer Pumpeneinrichtung zugeführt.

Es ist jedoch auch möglich, dem Leichtzuschlag bereits trockenes Bindemittel beizumischen, so daß am Anschluß 4 keine Schlämme, sondern lediglich Wasser zugeführt werden muß, so daß sich in der Mischkammer Wasser und das Gemenge aus Leichtzuschlag und Bindemittel miteinander vermischt. Auf diese Weise kann eine aufwendige Pumpe für die Suspension entfallen.

Durch die separate Regulierungsmöglichkeiten der einzelnen Komponenten sind die Mengenströme und die Lieferdrücke so regulierbar, daß je nach Zuschlag die gewünschte hohe Dichte erreicht werden kann.

Für den Fall, daß als Leichtzuschlag Mischungen verwendet werden, können diese aus zwei verschiedenen Silos zugeführt und über einen Hosenanschluß entsprechend den gewünschten Anteilen der Spritzeinrichtung zugeführt werden.

Die Zuschlagstoffe sind nicht auf die oben beschriebenen Zuschlagstoffe beschränkt. Zwar wurden in Verbindung mit den genannten Zuschlagstoffen zunächst Wärmedämmeigenschaften ins Auge gefaßt, jedoch sind in gleicher Weise auch Schalldämmeigenschaften erzielbar, insbesondere wenn ein Dämmputz des beschriebenen Aufbaus an Gewölbedecken, geneigten Flächen und auch auf dem Boden als Estrich zum Einsatz kommt. Es können auch andere Dämmeigenschaften beispielsweise Schwingungsdämmung, Feuerschutz etc. bei geeigneter Auswahl der Zuschlagstoffe erzielt werden. Grundsätzlich sind sämtliche in Kornform verarbeitbare Materialien denkbar.

In Abweichung des oben beschriebenen kann der Strömungsdurchgang durch das Gehäuse in Abhängigkeit des zu verarbeitenden Materials statt mit einer sich erweiternden Mischkammer mit einem konstanten Durchmesser oder mit angepaßten Venturi-Düsen-Anordnungen ausgestattet sein.

Der erfindungsgemäße Mörtel kann sowohl als Putz-, Estrich- und auch als Mauermörtel Verwendung finden.

Der erfindungsgemäße Mörtel sowie das erfindungsgemäße Verfahren zum Herstellen des Mörtels und das Verfahren zum Auftragen kann insbesondere auch bei Sanierarbeiten von Dächern, beispielsweise Asbest-Zement-Welldächern verwendet werden.

In einem solchen Fall kann das erfindungsgemäße Material entweder direkt auf das bestehende Bauteil aufgespritzt werden oder es erfolgt eine Vorbehandlung mit einer Schlämme (evtl. zusätzliches Einlegen einer Armierung).

## Patentansprüche

1. Putz oder Estrich, bestehend aus Bindemitteln oder Bindemittelcompound und Zuschlag, der aus DIN 4226-Teil 1, Zuschlag und/oder vollständig oder zumindest vorherrschend aus Leichtzuschlag mit Dämmeigenschaften besteht, dadurch **gekennzeichnet,** daß mit Bindemitteln oder Bindemittelcompound benetzter Zuschlag ein Haufwerk mit freien Zwickeln zwischen benachbarten Leichtzuschlagelementen bildet.

2. Putz oder Estrich nach Anspruch 1, **dadurch gekennzeichnet,** daß der Zuschlag vollständig oder zumindest vorherrschend ein mineralischer Leichtzuschlag ist, **gekennzeichnet** durch die Merkmale
a) die Trockenrohdichte beträgt zwischen 180-500 g/l,
b) die Wärmeleitzahl beträgt zwischen 0,07 und 0,4 W/mk.

3. Putz oder Estrich nach mindestens einem der vorangegangenen Ansprüche, **dadurch gekennzeichnet,** daß der Leichtzuschlag ein Einkornhaufwerk ist und aus der Gruppe der nachfolgenden Materialien ausgewählt oder aus Mischungen daraus gebildet ist:
Mineralischer Leichtzuschlag wie Glasschaum, Perlite, Vermiculite oder organischer Leichtzuschlag, wie expandiertes Polystrol, Korkgranulat, Cellulosefaserprodukte und/oder künstliche oder natürliche Materialen geblähter oder poröser Struktur.

4. Putz oder Estrich nach mindestens einem der Ansprüche 1 bis 3, **dadurch gekennzeichnet,** daß das Bindemittelcompound folgende Bestandteile aufweist:
| | |
|---|---|
| Portlandzement (Schnellzementsystem) | 58 - 99% |
| Kalkhydrat | 0 - 15% |
| Füller | 0 - 15% |
| Haftvermittler, Wasserrückhaltemittel, Schaumbildner, Verdicker | 0 - 20% |
| Fasern der Länge 2 - 20 mm | 0 - 2%. |

5. Putz oder Estrich nach mindestens einem der Ansprüche 1 bis 4, **dadurch gekennzeichnet,** daß anstelle von Portlandzement im Bindemittel/Bindemittelcompound folgende Bindesysteme Verwendung finden: Wasserglas, Gips oder Kunstharzsysteme.

6. Putz oder Estrich nach mindestens einem der vorangegangenen Ansprüche, **dadurch gekennzeichnet,** daß der Leichtzuschlag zusätzlich trockenes Bindemittelcompound aufweist.

7. Putz oder Estrich nach mindestens einem der vorangegangenen Ansprüche, **dadurch gekennzeichnet,** daß als Zuschlag trockener oder naßer Sand als Einkorn oder in abgestufter Sieblinie verwendet wird.

8. Verfahren zum Herstellen eines Mörtels zur Verwendung als Putz, Estrich oder Spezialmörtel unter Verwendung einer Spritzeinrichtung, **gekennzeichnet** durch folgende Verfahrensschritte:
a) Zuführen einer Mischung aus Wasser und Bindemittel, z.B. Schlämme (Slurry) zur Spritzeinrichtung unter Druck,
b) Zuführen eines Normal- oder Leichtzuschlags aus einem Silo unter Druck zur Spritzeinrichtung,
c) Zerstäuben der Schlämme (Slurry) in der Spritzeinrichtung,
d) Benetzen des Normal- oder Leichtzuschlags mit der zerstäubten Schlämme (Slurry) in der Spritzeinrichtung,
e) Ausspritzen des benetzten Normal- oder Leichtzuschlags als Mörtel aus der Spritzeinrichtung.

9. Verfahren nach Anspruch 8, **dadurch gekennzeichnet,** daß der Zuschlag ein Leichtzuschlag ist.

10. Verfahren nach Anspruch 8, **dadurch gekennzeichnet,** daß Zuschlag gem. DIN 4226-Teil 1, zugegeben wird.

11. Verfahren nach einem der vorangegangenen Verfahrensansprüche, **dadurch gekennzeichnet,** daß
mit trockenem Bindemittelcompound versetzter Leichtzuschlag verwendet wird.

12. Verfahren nach mindestens einem der vorangegangenen Verfahrensansprüche, **dadurch gekennzeichnet,** daß das Zerstäuben in einem Zerstäuberbereich der Spritzeinrichtung durchgeführt wird.

13. Verfahren nach mindestens einem der vorangegangenen Verfahrensansprüche, **dadurch gekennzeichnet,** daß das Benetzen in einer Mischkammer der Spritzeinrichtung durchgeführt wird.

14. Verfahren nach mindestens einem der vorangegangenen Verfahrensansprüche, **dadurch gekennzeichnet,** daß das Benetzen mit Wasser durchgeführt wird, bevor die Bestandteile in die Spritzeinrichtung eintreten. Verfahren nach mindestens einem der vorangegangenen Verfahrensansprüche, **dadurch gekennzeichnet,** daß der Luftdruck ca. 2 bar beträgt.

15. Verfahren nach mindestens einem der vorangegangenen Verfahrensansprüche, **dadurch gekennzeichnet,** daß die Zufuhr der zweiten Komponente, z.B. Bindemittel und/oder Wasser, ca. 8 - 10 l/min beträgt.

16. Verfahren nach mindestens einem der vorangegangenen Verfahrensansprüche, **dadurch gekennzeichnet,** daß die erste Komponente, z.B. Leichtzuschlag, mit einem Silodruck von ca. 0,6 - 0,8 bar zugeführt wird.

17. Verfahren nach mindestens einem der vorangegangenen Verfahrensansprüche, **dadurch gekennzeichnet,** daß der Arbeitsdruck am Spritzkopf ca. 0,4 - 0,5 bar beträgt.

18. Verfahren zum Herstellen eines Putzes oder Estrichs mittels der Spritzmethode unter Verwendung mindestens einer Spritzeinrichtung, **gekennzeichnet** durch folgende Verfahrenssschritte:
a) Aufspritzen einer Haftlage bestehend aus einer Schlämme oder eines Slurry, welches Material aus der Spritzeinrichtung unter Druck aufgespritzt wird,
b) Aufspritzen eines in der Spritzeinrichtung mit der Schlämme oder des Slurry benetzten Leichtzuschlags auf die Haftlage,
c) Aufspritzen mindestens einer Außenlage aus Slurry oder Schlämme.

19. Verfahren nach mindestens einem der vorangegangenen Verfahrensansprüche, **dadurch gekennzeichnet,** daß die Haftlage aus dem Bindemittel/Bindemittelcompound besteht, das bei abgeschaltetem Zuschlag aus der Spritzeinrichtung ausgespritzt wird.

20. Verfahren nach mindestens einem der vorangegangenen Verfahrensansprüche, **dadurch gekennzeichnet,** daß als Außenlage eine Lage Bindemittel/Bindemittelcompound aufgespritzt wird, auf die gegebenenfalls aus einer anderen Spritzeinrichtung eine weitere Putzlage aufgespritzt wird.

21. Vorrichtung zum Herstellen und / oder Auftragen eines aus mindestens zwei Komponenten bestehenden Mörtels, insbesondere nach den Ansprüchen 1 bis 7, mit einem rohrförmigen Gehäuse 3 und daran angeordneten Anschlüssen für die mindestens zwei Komponenten des Mörtels, wobei in dem Gehäuse (1) eine Mischkammer (2) und eine Luft-Zerstäubereinrichtung angeordnet sind und mit einer Ausgangsdüse, in der die mindestens zwei Komponenten miteinander vermischt werden, **dadurch gekennzeichnet,** daß die Mischkammer (2) im wesentlichen als Erweiterung des Gehäuses (1) ausgebildet ist.

22. Vorrichtung nach Anspruch 15, **dadurch gekennzeichnet,** daß in dem Gehäuse ein Luftrohr (6) angeordnet ist, das an seinem Ende vor dem Eingang zur Mischkammer (2) mit einer Düseneinrichtung (7) ausgebildet ist.

23. Vorrichtung nach einem der vorangegangenen Vorrichtungsansprüche, **dadurch gekennzeichnet,** daß das Gehäuse (1) das Luftrohr (6) in einem Abstand umschließt und zwischen dem Luftrohr (6) und dem Gehäuse (1) ein Ringkanal (17) für die Zufuhr der ersten Komponente ausgebildet ist.

24. Vorrichtung nach einem der vorangegangenen Vorrichtungsansprüchen, **dadurch gekennzeichnet,** daß das Luftrohr (6) im Abstand konzentrisch ein Lieferrohr (8) für die zweite Komponente umschließt.

25. Vorrichtung nach einem der vorangegangenen Vorrichtungsansprüchen, **dadurch gekennzeichnet,** daß die Düseneinrichtung (7) des Luftrohrs (6) die zweite Komponente zerstäubt und in der Mischkammer (2) die zerstäubte zweite Komponente mit der ersten Komponente vermischt wird.

26. Vorrichtung nach einem der vorangegangenen Vorrichtunsansprüche, **dadurch gekennzeichnet,** daß im Bereich des Ausgangsdüsenkopfs und/oder im Bereich der Mischkammer (2) eine Zufuhr für Zusatzluft (13) vorgesehen ist.

27. Vorrichtung nach einem der vorangegangenen Vorrichtungsansprüchen, **dadurch gekennzeichnet,** daß die Mischkammer (2) sich vom Mischkammereingang her konisch erweitert und sich zum Mischkammerausgang hin in Richtung Spritzkopf konisch verengt.

28. Vorrichtung nach Anspruch 25, **dadurch gekennzeichnet,** daß zwischen den beiden konischen Bereichen ein zylindrischer Bereich ausgebildet ist.

29. Vorrichtung nach einem der vorangegangenen Vorrichtungsansprüchen, **dadurch gekennzeichnet,** daß in der Mischkammer (2) eine zusätzliche Mischeinrichtung (10) angeordnet ist.

30. Vorrichtung nach Anspruch 29, **dadurch gekennzeichnet,** daß die Mischeinrichtung (10) eine Drossel ist.

31. Vorrichtung nach Anspruch 30, **dadurch gekennzeichnet,** daß die Drossel scheibenförmig als Nesselmembran mit Kreuzschlitz ausgebildet ist.

32. Vorrichtung nach Anspruch 31, **dadurch gekennzeichnet,** daß die Nesselmembran eine Vielzahl von im Abstand auf mindestens einem konzentrischen Kreisring angeordneten Bohrungen aufweist, in denen die Nesselborsten gehalten sind.

33. Vorrichtung nach Anspruch 32, **dadurch gekennzeichnet,** daß mindestens ein konzentrischer Haltering vorgesehen ist, an dem die Nesselborsten befestigt sind.

34. Vorrichtung nach mindestens einem der Ansprüche 31 - 34, **dadurch gekennzeichnet,** daß die Nesselborsten um den Haltering herumgeschlungen sind und mit mindestens einem Ende beweglich in die Mischkammer hineinragen.

35. Vorrichtung nach mindestens einem der Ansprüche 25 - 28, **dadurch gekennzeichnet,** daß sich die Nesselborsten mindestens bis zur Hälfte der verbleibenden Mischkammer erstrecken.

36. Vorrichtung nach mindestens einem der vorangegangenen Vorrichtungsansprüche, **dadurch gekennzeichnet,** daß die Mischkammer zumindest im Bereich der Nesselborsten mit einer Auskleidung versehen ist.

37. Vorrichtung nach mindestens einem der vorangeangenen Vorrichtungsansprüche, **dadurch gekennzeichnet,** daß die Drosselscheibe im Eintrittsbereich, insbesondere nach der konischen Erweiterng der Mischkammer angeordnet ist.

38. Vorrichtung nach mindestens einem der vorangegangenen Vorrichtungsansprüche, **dadurch gekennzeichent,** daß das Gehäuse im Bereich der Mischkammer lösbar geteilt ist.

39. Vorrichtung nach mindestens einem der vorangegangenen Vorrichtungsansprüche, **dadurch gekennzeichnet,** daß die Drosselscheibe in dem Teilungsbereich der Mischkammer angenordnet ist.

40. Vorrichtung nach mindestens einem der vorangegangenen Vorrichtungsansprüche, **dadurch gekennzeichnet,** daß ein Gehäuseabschnitt vor der Mischkammer im Bereich der Luft-Zerstäubereinrichtung mit einem elastischen Wandabschnitt ausgestattet ist.

41. Vorrichtung nach mindestens einem der vorangegangenen Vorrichtungsansprüche, **dadurch gekennzeichnet,** daß im Ausgang der Mischkammer (2) eine Rückschlageinrichtung (11) angeordnet ist.

42. Vorrichtung nach mindestens einem der vorangegangenen Vorrichtungsansprüche, **dadurch gekennzeichnet,** daß am Spritzkopf (14) eine Strahlreguliereinrichtung ausgebildet ist.

43. Vorrichtung nach Anspruch 25, **dadurch gekennzeichnet,** daß die Strahlreguliereinrichtung den austretenden Strahl mechanisch und/oder pneumatisch verändert.

44. Vorrichtung nach mindestens einem der vorangegangenen Vorrichtungsansprüche, **dadurch gekennzeichnet,** daß der Eingang für die erste Komponente seitlich am Gehäuse (1) angeordnet ist.

45. Vorrichtung nach mindestens einem der vorangegangenen Vorrichtungsansprüche, **dadurch gekennzeichnet,** daß die Zufuhr der einzelnen Komponenten und der Luft separat steuerbar ist.

46. Vorrichtung nach einem der vorangegangenen Vorrichtungsansprüche, **dadurch gekennzeichnet,** daß der Luftdruck ca. 2 bar beträgt.

47. Vorrichtung nach mindestens einem der vorangegangenen Vorrichtungsansprüche, **dadurch gekennzeichnet,** daß die Zufuhr der zweiten Komponente, z.B. Bindemittel und/oder Wasser, ca. 8 - 10 l/min beträgt.

48. Vorrichtung nach mindestens einem der vorangegangenen Vorrichtungsansprüche, **dadurch gekennzeichnet,** daß die erste Komponente, z.B. Leichtzuschlag, mit einem Silodruck von ca. 0,6 - 0,8 bar zugeführt wird.

49. Vorrichtung nach mindestens einem der vorangegangenen Vorrichtungsansprüche, **dadurch gekennzeichnet,** daß der Arbeitsdruck am Spritzkopf ca. 0,4 - 0,5 bar beträgt.

50. Vorrichtung nach mindestens einem der vorangegangenen Vorrichtungsansprüche, **dadurch gekennzeichnet,** daß eine zweite Luft/Bindemittel- Slurryleitung (6', 8') als Bypass an der Mischkammer (2) vorbeigeführt ist und auf der Höhe des Spritzkopfes mit einer Austrittsdüsenanordnung (7') versehen ist.

51. Vorrichtung nach mindestens einem der vorangegangenen Vorrichtungsansprüche, **dadurch gekennzeichnet,** daß die Luft- und / oder die Bindemittel-Slurryleitung (6',8') separat steuerbar ist / sind.

52. Mörtel, hergestellt nach mindestens einem der vorangegangenen Ansprüche, **dadurch gekennzeichnet,** daß er zum Mauern von Bausteinen verwendet wird.

53. Putz- oder Estrichsystem, bestehend aus Bindemittel oder Bindemittelcompound und Zuschlag, aus DIN 4226-Zuschlag und/oder vollständig oder zumindest vorherrschend aus Leichtzuschlag mit Dämmeigenschaften besteht, **dadurch gekennzeichnet,** daß der mit Bindemittel oder Bindemittelcompound benetzte Zuschlag ein Haufwerk mit freien Zwickeln zwischen benachbarten Zuschlagelementen ist und eine Dämmlage auf dem Mauerwerk oder dem Untergrund bildet, die mit einer Decklage versehen ist.

54. Putz- oder Estrichsystem, nach Anspruch 53, **dadurch gekennzeichnet,** daß zwischen dem Mauerwerk/Untergrund und der Dämmlage eine Haftlage angeordnet ist.

55. Putz- oder Estrichsystem, nach Anspruch 53 oder 54, **dadurch gekennzeichnet,** daß der Putz oder Estrich eine mauerseitige bzw. bodenseitige Haftlage, anschließend eine bis zu 12 cm dicke, mit Bindemittel benetzte Zuschlagslage und darauf zumindest eine Außenlage aufweist.
